(19) Europäisches Patentamt
European Patent Office
Office européen des brevets

(11) EP 1 096 483 B1

## (12) EUROPEAN PATENT SPECIFICATION

(45) Date of publication and mention
of the grant of the patent:
**15.03.2006 Bulletin 2006/11**

(51) Int Cl.:
***G11B 7/135*** *(2006.01)*    ***G11B 7/125*** *(2006.01)*

(21) Application number: **00309141.0**

(22) Date of filing: **17.10.2000**

(54) **Optical pickup**

Optische Abtasteinheit

Tête de lecture optique

(84) Designated Contracting States:
**DE FR GB NL**

(30) Priority: **30.10.1999  KR 9947749**
**30.10.1999  KR 9947751**

(43) Date of publication of application:
**02.05.2001  Bulletin 2001/18**

(73) Proprietor: **SAMSUNG ELECTRONICS CO., LTD.**
**Suwon-City, Kyungki-do (KR)**

(72) Inventors:
- **Kim, Tae-Kyung**
  **Paldal-gu,**
  **Suwon-city,**
  **Kyungki-do (KR)**
- **Chung, Chong-Sam**
  **Seongnam-city,**
  **Kyungki-do (KR)**
- **Ahn, Young-Man**
  **Youngtong-dong,**
  **Suwon-city,**
  **Kyungki-do (KR)**
- **Seo, Hea-jung**
  **Seongnam-city,**
  **Kyungki-do (KR)**

(74) Representative: **Chugg, David John et al**
**Appleyard Lees,**
**15 Clare Road**
**Halifax,**
**West Yorkshire HX1 2HY (GB)**

(56) References cited:
EP-A- 0 831 466          EP-A- 0 844 605
EP-A- 1 043 615          GB-A- 2 328 776
US-A- 4 909 616          US-A- 5 596 452
US-A- 5 774 279

- **NARAHARA T ET AL: "OPTICAL DISC SYSTEM FOR DIGITAL VIDEO RECORDING" JAPANESE JOURNAL OF APPLIED PHYSICS, PUBLICATION OFFICE JAPANESE JOURNAL OF APPLIED PHYSICS. TOKYO, JP, vol. 39, no. 2B, PART 1, 11 July 1999 (1999-07-11), pages 912-919, XP001005912 ISSN: 0021-4922**
- **PATENT ABSTRACTS OF JAPAN vol. 2000, no. 01, 31 January 2000 (2000-01-31) & JP 11 296893 A (RICOH CO LTD), 29 October 1999 (1999-10-29) -& US 6 301 216 B1 9 October 2001 (2001-10-09)**
- **PATENT ABSTRACTS OF JAPAN vol. 1999, no. 01, 29 January 1999 (1999-01-29) & JP 10 283668 A (SAMSUNG ELECTRON CO LTD), 23 October 1998 (1998-10-23) -& US 6 043 912 A 28 March 2000 (2000-03-28)**

**Description**

The present invention relates to an optical pickup for high-density information writing and reading systems, and more particularly, to an optical pickup capable of reducing chromatic aberration which occurs when a blue light source is employed.

In optical writing and readingsystems, the recording density is determined by the size of focused spot. In general, the size of the focused spot (S) is proportional to wavelength ($\lambda$) and inversely proportional to numerical aperture (NA), which is expressed by the formula (1):

$$S \propto \lambda \ / \ NA ......................................(1)$$

For a higher recording density than is achieved with compact disks (CDs) or digital versatile disks (DVDs), the size of spot being focused on an optical disk must be further reduced. To reduce the spot size, as can be inferred from the formula (1), the wavelength ($\lambda$) of the laser beam must be reduced and the NA of the objective lens must be increased. Thus, for such high density information recording, a laser beam having a short wavelength, for example, a blue laser, must be employed as a light source and the NA of the objective lens must be maintained to be 0.6 or more.

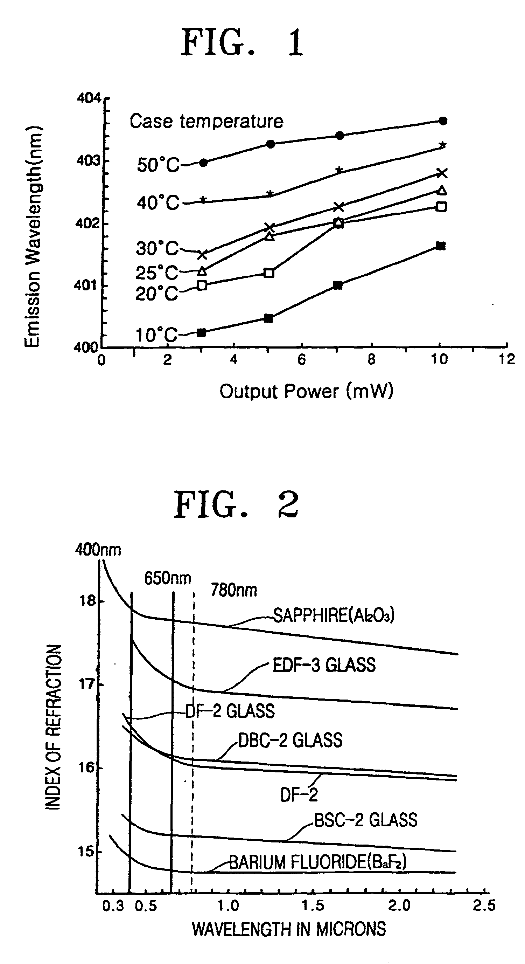

Figure 1 is a graph showing the variation of emission wavelength of a laser diode with respect to output power at various temperatures of the laser diode case. Figure 2 is a graph showing the variation of index of refraction with respect to wavelength for various optical materials. Referring to Figure 1, as the output power increases at a particular case temperature, the wavelength of emission increases proportionally, which is a feature of laser diodes. As shown in Figure 2, the index of refraction of various optical materials sharply varies in a short wavelength region, for example, near 400 nm, compared to at 780 nm for compact disks (CDs) and at 650 nm for digital versatile disks (DVDs).

When writing information to an optical disk, a desired position on the optical disk is searched for with reading power, and then a recording mark is made at the found position by increasing writing power. However, such a sudden variation in output power causes chromatic aberration in the optical system, thereby defocusing the optical spot on the optical disk. In addition, it takes considerable time to correct the defocusing by the control of a servo circuit. On the other hand, when a high frequency (HF) module is adopted to reduce noise caused by light reflected from an optical disk toward a light source, the wavelength of light emitted from the light source increases, thereby increasing chromatic aberration in the optical system, in particular, in the objective lens, and therefore causing deterioration of the quality of a reproduction signal. In addition, it should be further considered that, as can be seen from Figure 1, the wavelength of emission can increase with temperature inside of the optical pickup, and wavelength variation from using different light sources changes chromatic aberration.

Various optical pickups, which have a light source having a wavelength of 650 nm and an objective lens, have been suggested so as to be compatible with 0.6 mm-thick DVDs and 1.2mm-thick CDs. Among the techniques used in the suggested optical pickups are an annular shielding technique for blocking light passing through the intermediate area between far axis and near axis areas, a method for controlling the NA of objective lens by using liquid crystal (LC) shutters, and an hologram optical element (HOE) technique for splitting light using an HOE to form individual focuses onto two disks having different thicknesses. However, for a compact disk recordable (CD-R), reflectivity with respect to the red light source sharply drops, and thus a light source having a wavelength of 780 nm is necessary. For this reason, use of a DVD indefinite/CD definite optical system providing compatibility between light beams of 780 nm and 650 nm, or use of an objective lens having an annular focus region between far axis and near axis regions has been suggested. In particular, for a CD definite optical system, the NA of the objective lens is limited and divergent light is incident on the objective lens, thereby correcting aberration caused by the difference in thickness of disks and the objective lens.

An optical pickup adopting a short wavelength light source is required for higher density information writing and reading than DVD systems are capable of. As an example, for an optical pickup for HD-DVDs, laser light having a wavelength shorter than 650 nm used for DVDs, is required as a light source. However, as previously explained with reference to Figure 2, since the index of refraction of optical material of the disk varies sharply at wavelengths shorter than 650 nm, excessive aberration occurs. Thus, there is a need for an optical system compatible with existing DVDs, and capable of effectively reducing chromatic aberration.

For a DVD-R, the reflectivity with respect to light sources other than the red light source decreases. Thus, for compatibility with DVD-Rs, a light source having a wavelength of 650 nm must be further adopted. However, the problem of aberration can not be eliminated from a 400 nm-objective lens by just controlling the divergence of the light emitted from the 650 nm-light source and incident on the objective lens. Thus, the critical concern in developing HD-DVD compatible systems is finding an effective chromatic aberration correction technique.

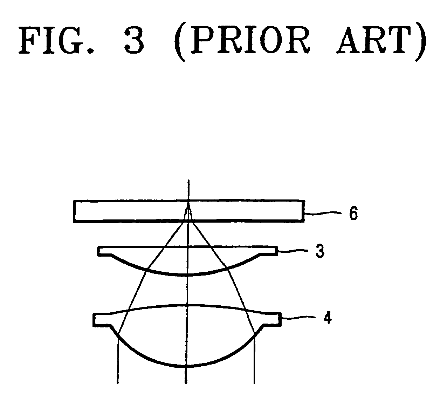

An example of a conventional objective lens capable of correcting chromatic aberration, which was described in Japanese Patent Laid-open Publication No. hei10-123410, is shown in Figure 3. Referring to Figure 3, the conventional objective lens is constructed of two lenses including a first lens 3 and a second lens 4. In particular, the first lens 3 for correcting chromatic aberration is arranged between a disk 6 and the second lens 4 for focusing light. This structure shown in Figure 3 allows the NA to be increased to 0.7 or more, so that such an objective lens can be employed in an optical system for high-density recording. However, the objective lens has problems in that use of two lenses increases the optical length of the system, and reproduction of beam spots is highly sensitive to a change in the relative positions of the two lenses.

US-A-4,909,616 shows an example of an optical pickup working at 830nm and 780nm wavelength and having a collimator lens with a reverse chromatic aberration to compensate the chromatic aberration of the objective lens in case of mode hopping.

EP-A-1 043 615 which is a document according to Article 54(3) EPC discloses the use of collimators with a negative and a positive lens in optical pickups employing a wavelength of 410nm. However, this document does not disclose the focus condition defined for the collimator of the present invention.

EP-A-0 844 605 discloses a dual wavelength optical pickup with 650nm and 400nm and a single collimator lens.

US-A-5,596,452 discloses a collimator lens system comprising three lens elements in three lens groups for collimating light rays omitted from a small light source like a semiconductor laser into parallel light rays for use, for instance in a laser printer or digital audio disk. This document forms the pre-characterising portion of independent claim 1 appended hereto.

With a view to solve or reduce the above problems, it is an aim of embodiments of the present invention to provide an optical pickup adopting different short wavelength laser beams as light sources.

It is another aim of embodiments of the present invention to provide an optical pickup capable of effectively correcting aberration caused by a sudden change in the refractivity of optical materials.

It is still another aim to provide an optical pickup using a laser beam of 650 nm for digital versatile disks (DVDs) and a laser beam of about 400 nm for HD-DVDs to be compatible with other optical recording media.

According to the present invention, there is provided an optical pickup as defined in claim 1.

The optical pickup may further comprise a beam splitter between the objective lens and the first photodetector, for transmitting the first laser beam from the first light source toward the first medium through the objective lens, and reflecting the first laser beam reflected from the first medium.

The optical pickup may further comprise a condensing lens between the first photodetector and the beam splitter, for condensing the first laser beam reflected from the first medium onto the first photodetector.

The collimating lens is preferably arranged between the beam splitter and the first light source.

The collimating lens may be arranged between the objective lens and the beam splitter.

If the front focal distances of the lenses from the light source toward the medium are f1, f2, ..., and fn, respectively, and the Abbe's numbers of the optical materials of the lenses are v1, v2, ..., and vn, respectively, then preferably, the optical pickup satisfies the relationship $-0.005 < 1/(f1 \cdot v1) + 1/(f2 \cdot v2) + ... + 1/(fn \cdot vn) < 0.005$.

The optical pickup may further comprise: a second light source which corresponds to a second medium, the second light source for generating a laser beam of a longer wavelength than the first light source, the objective lens focusing the second laser beam from the second light source onto the second medium; and a second photodetector for receiving the second laser beam emitted from the second light source and reflected from the second medium.

The optical pickup may further comprise a wavelength selecting filter on the optical axis near the objective lens.

Preferably, the first light source emits a first laser beam having a wavelength of about 400 nm, and the second light source emits a second laser beam having a wavelength of about 650 nm.

Preferably, the objective lens is arranged facing the first and second media; the first light source is arranged on the optical path of the objective lens; a beam splitter is arranged between the objective lens and the first light source; the second light source is arranged on the optical path of the light reflected from the beam splitter; and the collimating lens is arranged between the objective lens (101) and the beam splitter.

Preferably, the objective lens is arranged facing the first and second media; the first light source is arranged on the optical path of the objective lens, for emitting the first laser beam toward the first medium; first, second and third beam splitters are arranged on the optical path at predetermined positions from the first light source toward the objective lens; the second light source is arranged on the optical path of the light reflected by the third beam splitter, for emitting the second laser beam through the third beam splitter toward the second medium; the first photodetector is arranged on the optical path of the light reflected by the first beam splitter, for receiving the first laser beam emitted from the first light source and reflected from the first medium; the second photodetector is arranged on the optical path of the light reflected by the second beam splitter, for receiving the second laser beam emitted from the second light source and reflected from the second medium; and the collimating lens is arranged between the first and second beam splitters.

Preferably, the objective lens is arranged facing the first and second media; the first light source is arranged on the optical path of the objective lens, for emitting the first laser beam toward the first medium; first, second and third beam splitters are arranged on the optical path at predetermined positions from the first light source toward the objective lens; the second light source is arranged on the optical path of the light reflected by the third beam splitter, for emitting the second laser beam through the third beam splitter toward the second medium; the first photodetector is arranged on the optical path of the light reflected by the first beam splitter, for receiving the first laser beam emitted from the first light source and reflected from the first medium; the second photodetector is arranged on the optical path of the light reflected by the second beam splitter, for receiving the second laser beam emitted from the second light source and reflected from the second medium; and the collimating lens is arranged between the objective lens and the third beam splitter.

The optical pickup may further comprise a wavelength selecting filter between the objective lens and the collimating lens, for controlling the numerical aperture (NA) of the objective lens.

Preferably, the first light source emits a first laser beam having a wavelength of about 400 nm, and the second light source emits a second laser beam having a wavelength of about 650 nm.

Preferably, if the front focal distances of the lenses from the first light source toward the optical disk are f1, f2, ..., and fn, respectively, and the Abbe's numbers of the optical materials of the lenses are v1, v2, ..., and vn, respectively, the optical pickup satisfies the relationship $-0.005 < 1/(f1 \cdot v1) + 1/(f2 \cdot v2) + ... + 1/(fn \cdot vn) < 0.005$.

For a better understanding of the invention, and to show how embodiments of the same may be carried into effect, reference will now be made, by way of example, to the accompanying diagrammatic drawings in which:

Figure 1 is a graph showing the variation of emission wavelength of a laser diode with respect to output power at various temperatures of the laser diode case;

Figure 2 is a graph showing the variation of refractive index with respect to wavelength for various optical materials;

Figure 3 is a schematic view of a conventional objective lens for chromatic aberration correction;

Figure 4 shows the optical arrangement of a first embodiment of an optical pickup according to the present invention;

Figure 5 shows the optical arrangement of a second embodiment of the optical pickup according to the present invention;

Figure 6 illustrates the optical path of a third embodiment of the optical pickup according to the present invention;

Figure 7 illustrates aberration in the optical pickup of Figure 6;

Figure 8 illustrates the optical path of a fourth embodiment of the optical pickup according to the present invention;

Figure 9 illustrates aberration in the optical pickup of Figure 8;

Figure 10 illustrates the optical path of a fifth embodiment of the optical pickup according to the present invention;

Figure 11 illustrates aberration in the optical pickup of Figure 10;

Figure 12 illustrates the optical path of an optical pickup adopting a conventional collimating lens;

Figure 13 illustrates aberration in the conventional optical pickup of Figure 12;

Figure 14 illustrates the optical path of an optical pickup adopting a collimating lens according to the present invention;

Figure 15 illustrates aberration in the optical pickup of Figure 14;

Figure 16 shows the optical arrangement of a sixth embodiment of an optical pickup according to the present invention;

Figure 17 shows the optical arrangement of a seventh embodiment of the optical pickup according to the present invention;

Figure 18 shows the optical arrangement of an eighth embodiment of an optical pickup according to the present invention;

Figure 19 shows the optical arrangement of a ninth embodiment of the optical pickup according to the present invention; Figure 20 illustrates the optical path of light having a wavelength of 405 nm in the optical pickup according to the present invention;

Figure 21 illustrates aberration in the optical pickup of Figure 20;

Figure 22 illustrates the optical path of light having a wavelength of 650 nm in the optical pickup according to the present invention;

Figure 23 illustrates aberration in the optical pickup of Figure 22; and

Figure 24 illustrates aberration in the optical pickup of Figure 20, for 400 nm light and for 401 and 405 nm light.

Embodiment 1

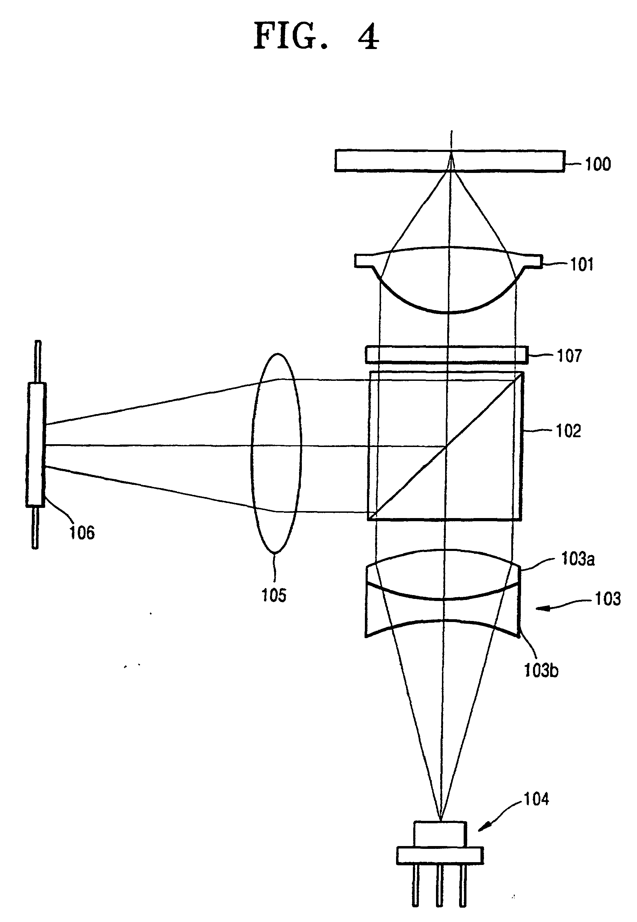

A first preferred embodiment of an optical pickup according to the present invention is shown in Figure 4. Referring to Figure 4, a light source 104 is positioned at the end of the optical axis of an objective lens 101 facing a medium (optical disk) 100. A λ/4 plate 107, a beam splitter 102 and a collimating lens 103 are arranged between the objective lens 101 and the light source 104. The collimating lens 103 includes a focusing lens 103a with focusing power and a diverging lens 103b with diverging power.

A photodetector 106 is arranged at the end of the optical path of the light reflected from the beam splitter 102, and a condensing lens 105 for condensing the reflected light is positioned between the beam splitter 102 and the photodetector 106.

When the light source 104 emits a laser beam of 500 nm or less, the collimating lens 103 has corresponding optical characteristics, which form a feature of the present invention. Assuming that the total focal distance of the collimating lens 103 is f, and the focal distance of the diverging lens 103b is fn, the collimating lens 103 satisfies the relationship -1.5 > f/fn.

Embodiment 2

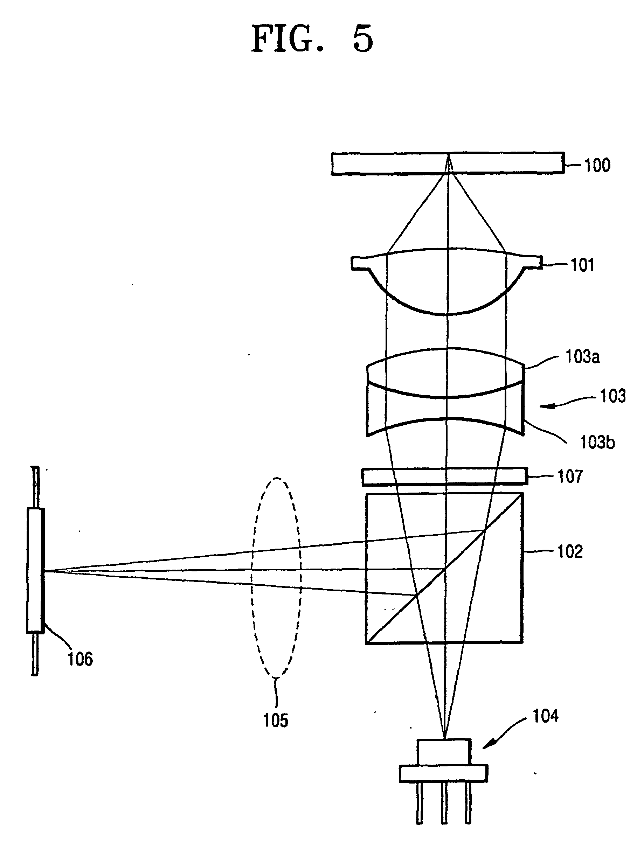

A second embodiment of the optical pickup according to the present invention is shown in Figure 5. Referring to Figure 5, a light source 104 is positioned coaxially on the optical axis of an objective lens 101 that faces a medium (optical disk) 100. A collimating lens 103, a λ/4 plate 107 and a beam splitter 102 are arranged between the objective lens 101 and the light source 104. The collimating lens 103 includes a focusing lens 103a with focusing power and a diverging lens 103b with diverging power.

A photodetector 106 is arranged at the end of the optical path of the light reflected from the beam splitter 102, and a condensing lens 105 for condensing the reflected light is positioned between the beam splitter 102 and the photodetector 106.

When the light source 104 emits a laser beam of 500 nm or less, the collimating lens 103 has corresponding optical characteristics, which form a feature of the present invention. Assuming that the focal distance of the entire collimating lens 103 is f, and the focal distance of the diverging lens 103b is fn, the collimating lens 103 satisfies the relationship -1.5 > f/fn.

The difference between the present embodiment and the first embodiment is in the position of the collimating lens. In the following embodiments, the design data of optical structure will be shown. The collimating lenses of the previous two embodiments may have the same optical characteristics as the collimating lenses of the following embodiments.

Embodiment 3

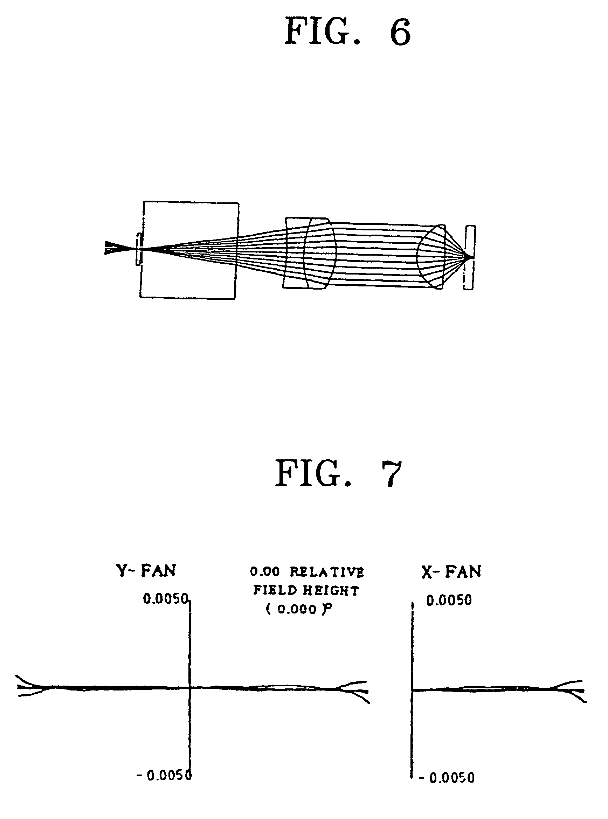

A third embodiment of the optical pickup according to the present invention is schematically shown in Figure 6, and the optical data for the optical pickup of Figure 6 is listed in Table 1.

Table 1

| Surface | Curvature Radius | Thickness | Name of Glass |
|---|---|---|---|
| Object Surface | Infinity | 0.100000 | |
| s1 | Infinity | 6.250000 | BK7 |
| s2 | Infinity | 3.000000 | |

Table continued

| Surface | Curvature Radius | Thickness | Name of Glass |
|---|---|---|---|
| s3 | -15.219848 | 1.000000 | FDS1 |
| s4 | 5.866928 | 2.000000 | TAC8 |
| s5 | -4.118685 | 5.000000 | |
| s6 STOP | 1.770182 | 1.802215 | BACD5 |
| | K: -0.721945<br>A: 0.537259E-02 B: 0.183575E-03 C:0.85500E-04 D:-.121341E -04 | | |
| s7 | -11.452471 | 1.272566 | |
| | K: -179.717593<br>A: 0.222258E-02 B: -.194835E-03 C:-.172951E-04 D: 0.399488E-05 | | |
| s8 | Infinity | 0.600000 | 'CG' |
| s9 | Infinity | 0.000000 | |
| Image Surface | Infinity | 0.000000 | |
| Equation of Aspheric Surface (see Formula (2) hereinbelow) | | | |
| Refractivity/Abbe's Number on d-line, v | | BACD5 : 1.606048/ 61.3<br>FDS1 : 2.012371/ 20.9<br>TAC8 : 1.752798/ 54.7<br>BK7 : 1.530849/ 64.2<br>'CG' : 1.623343/ 31.0 | |
| Diameter of Entrance Pupil (mm) | | 4.0 | |
| Wavelength (nm) | | 400 | |
| Focal Distance of Diverging and Focusing Components of the Collimating Lens (mm) | | -4.085/3.517 | |
| Focal Distance of Entire Collimating Lens (mm) | | 10.0 | |
| Focal Distance of Objective Lens (mm) | | 2.667 | |
| Σ 1 / ($fi·vi$) | | -0.0004 | |

In the present embodiment, a light source of 400 nm, a collimating lens having a focal distance of 10 mm, and an objective lens having a NA of 0.75 were employed. Aberration in the optical pickup is shown in Figure 7.

Embodiment 4

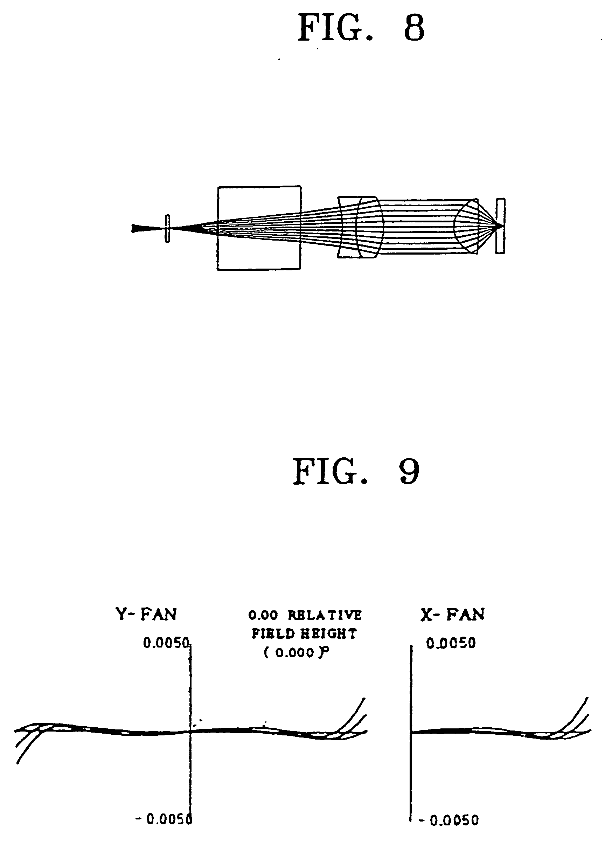

A fourth embodiment of the optical pickup according to the present invention is schematically shown in Figure 8, and the optical data for the optical pickup of Figure 8 is listed in Table 2.

Table 2

| Surface | Curvature Radius | Thickness | Name of Glass |
|---|---|---|---|
| Object Surface | Infinity | 3.680296 | |
| s1 | Infinity | 6.250000 | BK7 |
| s2 | Infinity | 3.000000 | |
| s3 | -7.765552 | 1.000000 | FDS1 |
| s4 | 5.998733 | 2.000000 | NBFD12 |
| s5 | -4.527848 | 5.000000 | |
| s6 STOP | 1.770182 | 1.802215 | BACD5 |

Table continued

| Surface | Curvature Radius | Thickness | Name of Glass |
|---|---|---|---|
| | K: -0.721945<br>A: 0.537259E-02 B: 0.183575E-03 C:0.85500E-04 D:-.121341E -04 | | |
| s7 | -11.452471 | 1.272566 | |
| | K: -179.717539<br>A: 0.222258E-02 B: -.194835E-03 C:-.172951E-04 D: 0.399488E-05 | | |
| s8 | Infinity | 0.600000 | 'CG' |
| s9 | Infinity | 0.000000 | |
| Image Surface | Infinity | 0.000000 | |
| Equation of Aspheric Surface (See Formula (2) hereinbelow) | | | |
| Refractivity/Abbe's Number on d-line, v | | BACD5 : 1.606048/ 61.3<br>FDS1 : 2.012371/ 20.9<br>NBFD12 : 1.834057/ 42.3<br>BK7 : 1.530849/ 64.2<br>'CG' : 1.623343/ 31.0 | |
| Diameter of Entrance Pupil (mm) | | 4.0 | |
| Wavelength (nm) | | 400 | |
| Focal Distance of Diverging and Focusing Components of Collimating Lens (mm)<br>Focal Distance of Entire Collimating Lens (mm) | | -3.225/3.386<br>10.0 | |
| Focal Distance of Objective Lens (mm) | | 2.667 | |
| $\Sigma 1 / (f_i \cdot v_i)$ | | -0.0017 | |

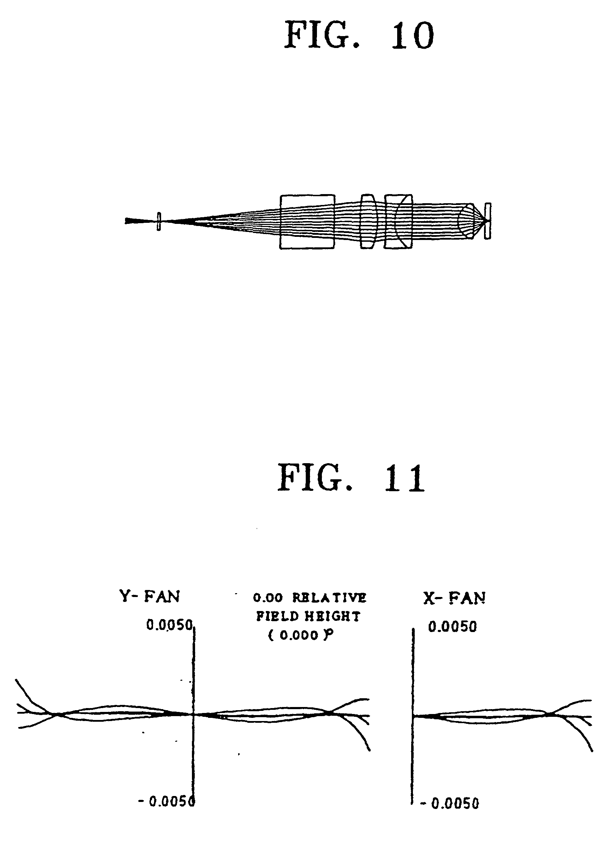

In the present embodiment, a light source of 400 nm, a collimating lens having a focal distance of 15 mm, and an objective lens having a NA of 0.75 were employed. Aberration in the optical pickup is shown in Figure 9.

Embodiment 5

A fifth embodiment of the optical pickup according to the present invention is schematically shown in Figure 10, and the optical data for the optical pickup of Figure 10 is listed in Table 3.

Table 3

| Surface | Curvature Radius | Thickness | Name of Glass |
|---|---|---|---|
| Object Surface | Infinity | 13.381632 | |
| s1 | Infinity | 6.250000 | BK7 |
| s2 | Infinity | 3.000000 | |
| s3 | 21.6695568 | 2.000000 | BACD5 |
| s4 | -7.653445 | 1.000000 | |
| s5 | -36.568237 | 1.000000 | FD4 |
| s6 | 3.690184 | 2.000000 | BACD5 |
| s7 | -49.729832 | 5.000000 | |
| s8 STOP | 1.770182 | 1.802215 | BACD5 |
| | K: -0.721945<br>A: 0.537259E-02 B: 0.183575E-03 C:0.85500E-04 D:-.121341E -04 | | |
| s9 | -11.452471 | 1.272566 | |

Table continued

| Surface | Curvature Radius | Thickness | Name of Glass |
|---|---|---|---|
| | K: -179.717593<br>A: 0.222258E-02 B: -.194835E-03 C:-.172951E-04 D: 0.399488E-04 | | |
| s10 | Infinity | 0.600000 | 'CG' |
| s9 | Infinity | 0.000000 | |
| Image Surface | Infinity | 0.000000 | |
| Equation of Aspheric Surface (see Formula (2) hereinbelow) | | | |
| Refractivity/Abbe's Number on d-line, v | | BACD5 : 1.606048/ 61.3<br>FD4 : 1.808613/ 27.5<br>BK7 : 1.530849/ 64.2<br>'CG' : 1.623343/ 31.0 | |
| Diameter of Entrance Pupil (mm) | | 4.0 | |
| Wavelength (nm) | | 400 | |
| Focal Distance of Diverging and Focusing Components of Collimating Lens (mm) | | 9.579/-4.100/5.750 | |
| Focal Distance of Entire Collimating Lens (mm) | | 20.0 | |
| Focal Distance of Objective Lens (mm) | | 2.667 | |
| $\Sigma\, 1\, /\, (fi \cdot vi)$ | | 0.0018 | |

In the present embodiment, a light source of 400 nm, a collimating lens having a focal distance of 20 mm, and an objective lens having a NA of 0.75 were employed. Aberration in the optical pickup is shown in Figure 11.

The equation of an aspheric surface, which was previously mentioned in Tables 1 through 3, is expressed by the formula (2):

$$Z = \frac{ch^2}{1 + \sqrt{1 - (1+k)c^2 h^2}} + Ah^4 + Bh^6 + Ch^8 + Dh^{10} + Eh^{12} + Fh^{14} \dots\dots\dots\dots\dots\dots\dots(2)$$

where z is depth from the vertex of the surface, h is distance from the optical axis, c is curvature, K is a conic coefficient, and A, B, C and D are aspheric coefficients.

For Embodiments 3, 4 and 5, as the wavelength of light emitted from the light source varies in the error range of $\pm$ 10 nm, the degree of defocus can be expressed as an uncertainty of $\pm$ 0-36 $\mu$m in the focal depth.

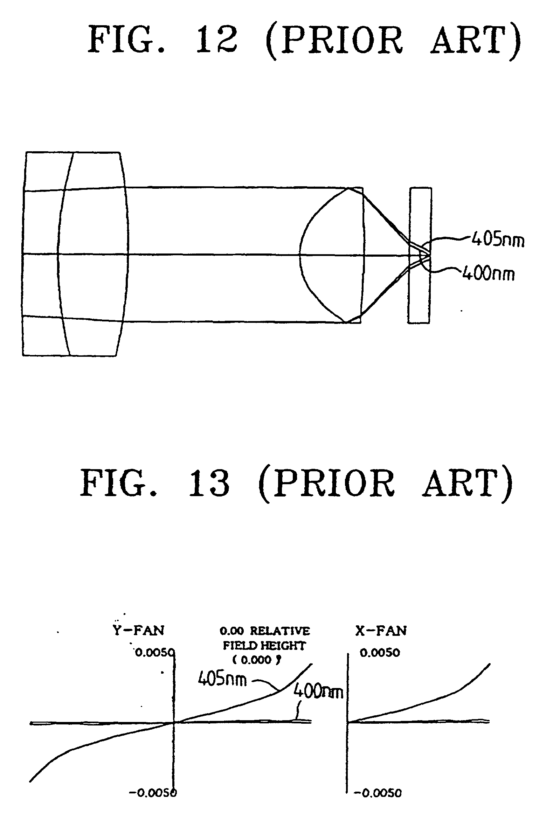

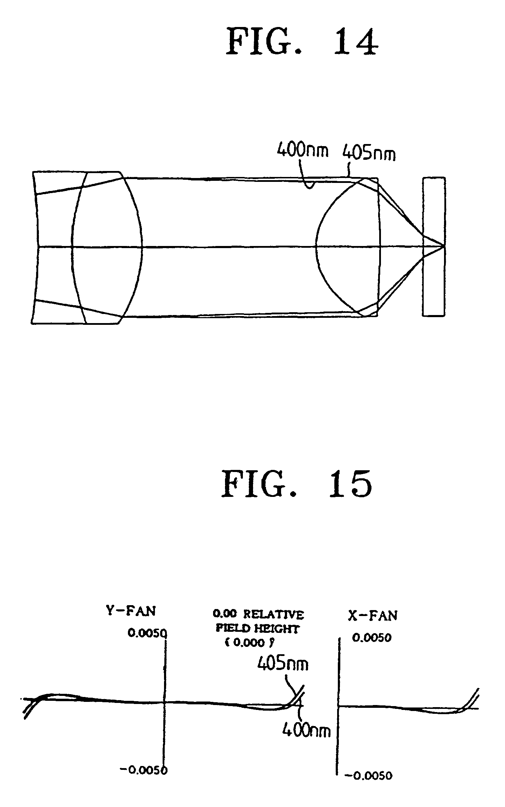

Figure 12 illustrates the optical path of an optical pickup adopting a conventional collimating lens, and Figure 13 illustrates aberration in the conventional optical pickup of Figure 12. In contrast, Figure 14 illustrates the optical path of an optical pickup adopting a collimating lens according to the present invention, and Figure 15 illustrates aberration in the optical pickup of Figure 14.

As shown in Figures 12 and 13, because the conventional collimating lens was designed to be suitable for a wavelength of 500 nm or more, the diverging power thereof is not sufficient to effectively correct chromatic aberration caused by a light beam having a wavelength shorter than 500 nm. For the optical pickup of Figure 12, the focal distances of each lens are -15.646, 8.999 and 2.667, the Abbe's numbers thereof are 43.0, 53.9 and 62.3, respectively, and $\Sigma\, 1\, /\, (fi \cdot vi)$ = 0.0067. As shown in Figure 13, aberration of 400 nm light is negligible for the optical pickup, however the degree of aberration suddenly increases for 405 nm light. Thus, the conventional collimating lens cannot be used for short wavelength light.

Meanwhile, as shown in Figures 14 and 15, variation of the degree of aberration between 400 nm and 405 nm emission beams is less. Because the collimating lens according to the present invention has high focusing power, aberration can be effectively corrected. As a result, a light spot can be focused onto the medium within the range of a focal depth in response to variation of the wavelength of emission light.

For more effective reduction of chromatic aberration with respect to such short wavelength light beams, assuming that the focal distance of the entire collimating lens is f and the focal distance of the diverging lens is fn, it is necessary that the collimating lens satisfies the relationship -1.5 > f/fn.

Preferably, assuming that the front focal distances of lenses, which constitute the optical pickup, are f1, f2, ..., and fn, arranged from the light source toward the medium, and the Abbe's numbers on the d-line of the optical materials for the lenses is v1, v2, ..., and vn, the optical pickup satisfies the relationship -0.005 < 1/(f1·v1)+1/(f2·v2)+...+1/(fn·vn) < 0.005.

An optical pickup adopting two light sources will be described in the following embodiments.

Embodiment 6

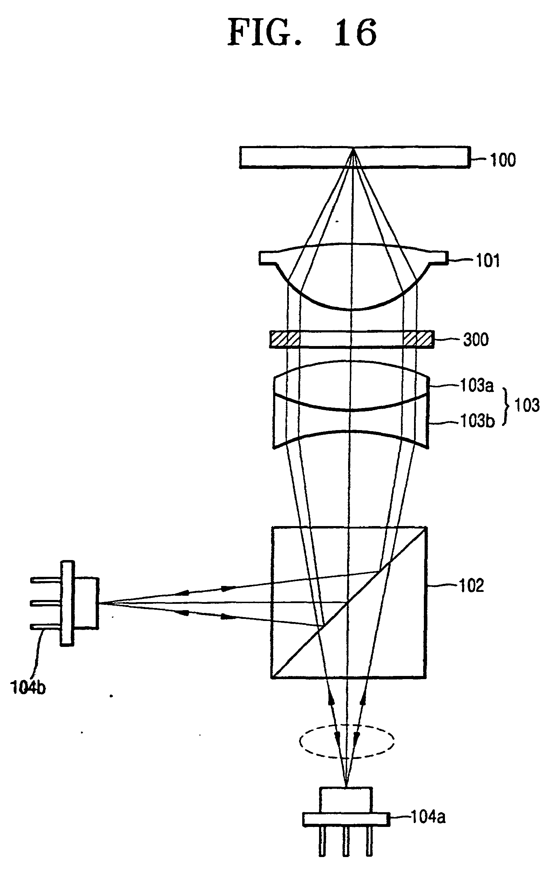

Referring to Figure 16, a first light source 104a is positioned at the end of the optical axis of an objective lens 101 that faces a medium 100. A wavelength selecting filter 300 for controlling the NA of the objective lens 101, a collimating lens 103, which is a feature of the present invention, and a beam splitter 102 are arranged between the objective lens 101 and the first light source 104a.

The beam splitter 102 transmits the laser beam emitted from the first light source 104a, and reflects the laser beam emitted from a second light source. As shown in Figure 16, the second light source 104b is arranged on the optical path of the light reflected from the beam splitter 102.

The use of the wavelength selecting filter 300 is optional. In other words, the wavelength selecting filter 300 is incorporated into the optical pickup when there is a need for separately controlling NA for the first and second light sources 104a and 104b. For example, if the first light source 104a emits a 400 nm blue laser beam and needs a NA of 0.7, and the second light source 104b emits a 650 nm red laser beam and needs a NA of 0.6, the wavelength selecting filter 300 is employed to allow a reduction of the NA of the objective lens to 0.6 for the 650 nm laser beam while transmitting all of the 400 nm laser beam.

A conventional light emitter/detector device, which includes a photodetector and a laser diode, may be used as the first and second light sources 104a and 104b, so that a laser beam may be emitted and received by the same device.

The collimating lens 103, which forms a feature of the present invention as mentioned previously, includes a focusing lens 103a with focusing power and a diverging lens 103b with diverging power. Assuming that the focal distance of the entire collimating lens 103 is f and the focal distance of the diverging lens 103b is fn, the collimating lens 103 satisfies the relationship -1.5 > f/fn. The collimating lens 103 collimates the laser beams from the first and second light sources 104a and 104b, and simultaneously helps to correct chromatic aberration.

Embodiment 7

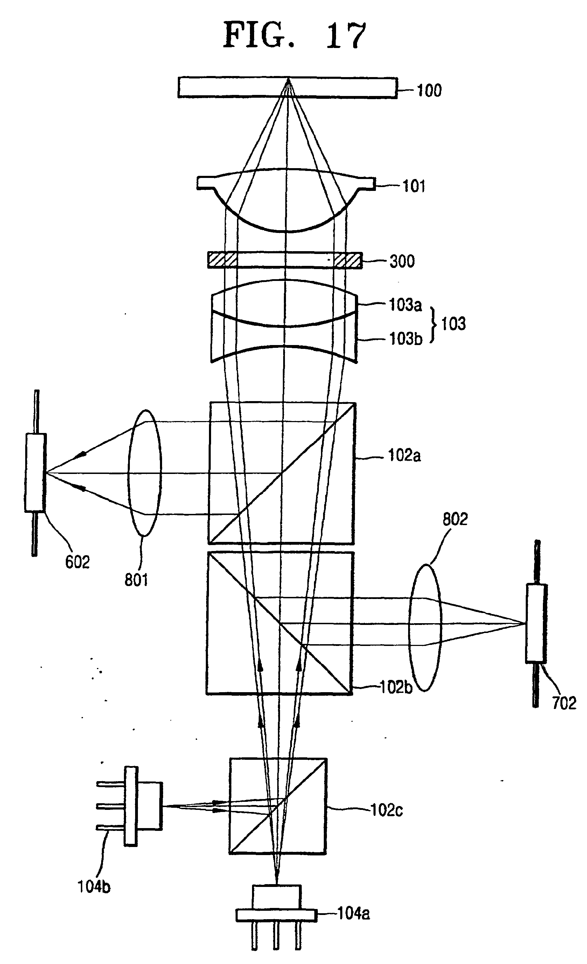

Referring to Figure 17, a first light source 104a is positioned at the end of the optical axis of an objective lens 101 that faces a medium 100. A wavelength selecting filter 300 for controlling the NA of the objective lens 101, a collimating lens 103, which is a feature of the present invention, and first, second and third beam splitters 102a, 102b and 102c are arranged at predetermined positions between the objective lens 101 and the first light source 104a.

The third beam splitter 102c transmits the laser beam from the first light source 104a and reflects the laser beam from a second light source 104b toward the medium 100. As shown in Figure 17, the second light source 104b is arranged on the optical path of the light reflected from the third beam splitter 102c.

The second beam splitter 102b transmits both of the laser beams from the first and second light sources 104a and 104b, and reflects the light reflected from the medium 100, which originated from the second light source 104b. The light reflected by the medium 100 and in turn by the second beam splitter 102b is condensed by a second condensing lens 802 onto a second photodetector 702.

The first beam splitter 102a transmits both of the laser beams from the first and second light sources 104a and 104b toward the medium 100. Also, the first beam splitter 102a reflects the light reflected from the medium 100, which originated from the first light source 104a, and transmits the light reflected from the medium 100, which originated from the second light source 104b. The light reflected by the medium 100 and in turn by the first beam splitter 102a is condensed by a first condensing lens 801 onto a first photodetector 602.

The use of the wavelength selecting filter 300 is optional. In other words, the wavelength selecting filter 300 is incorporated into the optical pickup when there is a need for separately controlling NA for the first and second light sources 104a and 104b. For example, if the first light source 104a emits a 400 nm blue laser beam and needs a NA of 0.7, and the second light source 104b emits a 650 nm red laser beam and needs a NA of 0.6, the wavelength selecting filter 300 is employed to allow a reduction of the NA of the objective lens to 0.6 for the 650 nm laser beam while transmitting all of the 400 nm laser beam.

The collimating lens 103, which forms a feature of the present invention as mentioned previously, includes a focusing lens 103a with focusing power and a diverging lens 103b with diverging power. Assuming that the focal distance of the entire collimating lens 103 is f and the focal distance of the diverging lens 103b is fn, the collimating lens 103

satisfies the relationship -1.5 > f/fn. The collimating lens 103 collimates the laser beams from the first and second light sources 104a and 104b, and simultaneously helps to correct chromatic aberration.

Embodiment 8

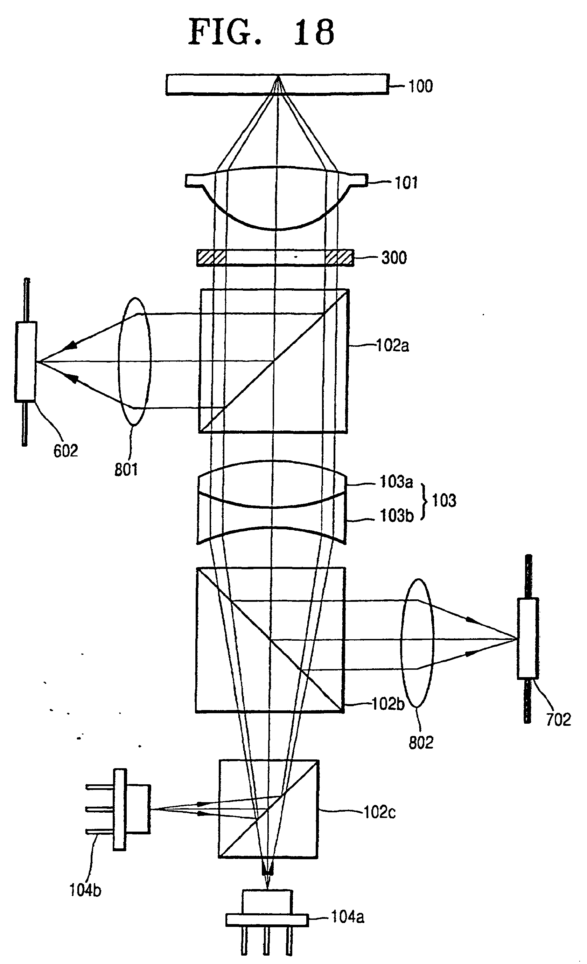

Referring to Figure 18, a first light source 104a is positioned at the end of the optical axis of an objective lens 101 that faces a medium 100. A wavelength selecting filter 300 for controlling the NA of the objective lens 101, and first, second and third beam splitters 102a, 102b and 102c are arranged at predetermined positions between the objective lens 101 and the first light source 104a. Also, a collimating lens 103, which is a feature of the present invention, is positioned between the first and second beam splitters 102a and 102b.

The third beam splitter 102c transmits the laser beam from the first light source 104a and reflects the laser beam from a second light source 104b toward the medium 100. As shown in Figure 18, the second light source 104b is arranged on the optical path of the light reflected from the third beam splitter 102c.

The second beam splitter 102b transmits all of the laser beams from the first and second light sources 104a and 104b, and reflects the light reflected from the medium 100, which originated from the second light source 104b. The light reflected by the medium 100 and in turn by the second beam splitter 102b is condensed by a second condensing lens 802 onto a second photodetector 702.

The first beam splitter 102a transmits all of the laser beams from the first and second light sources 104a and 104b toward the medium 100. Also, the first beam splitter 102a reflects the light reflected from the medium 100, which originated from the first light source 104a, and transmits the light reflected from the medium 100, which originated from the second light source 104b. The light reflected by the medium 100 and in turn by the first beam splitter 102a is condensed by a first condensing lens 801 onto a first photodetector 602.

The use of the wavelength selecting filter 300 is optional. In other words, the wavelength selecting filter 300 is incorporated into the optical pickup when there is a need for separately controlling NA for the first and second light sources 104a and 104b. For example, if the first light source 104a emits a 400 nm blue laser beam and needs a NA of 0.7, and the second light source 104b emits a 650 nm red laser beam and needs a NA of 0.6, the wavelength selecting filter 300 is employed to allow a reduction of the NA of the objective lens to 0.6 for the 650 nm laser beam while transmitting all of the 400 nm laser beam.

The collimating lens 103, which forms a feature of the present invention as mentioned previously, includes a focusing lens 103a with focusing power and a diverging lens 103b with diverging power. Assuming that the focal distance of the entire collimating lens 103 is f and the focal distance of the diverging lens 103b is fn, the collimating lens 103 satisfies the relationship -1.5 > f/fn. The collimating lens 103 collimates the laser beams from the first and second light sources 104a and 104b, and simultaneously helps to correct chromatic aberration.

Embodiment 9

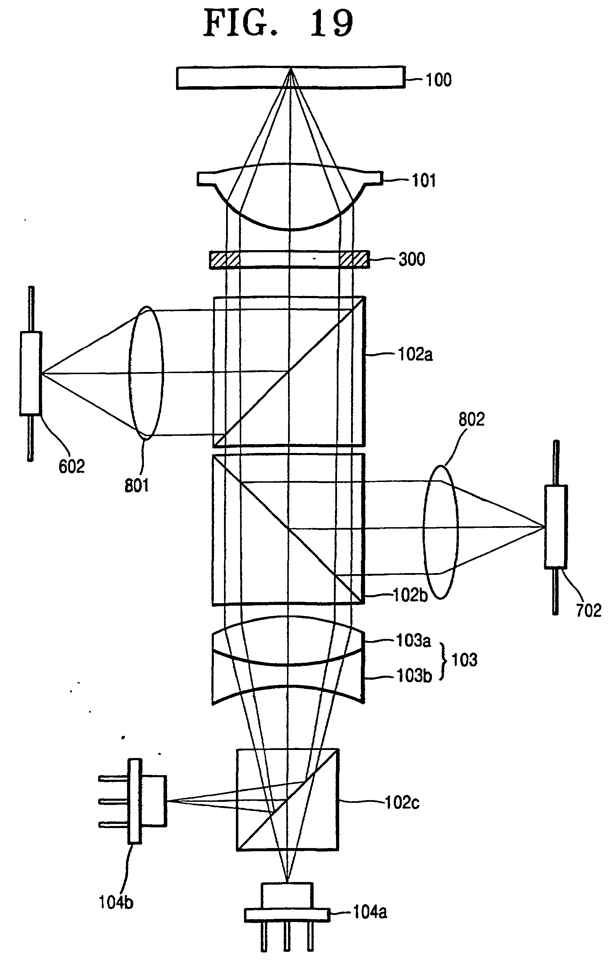

Referring to Figure 19, a first light source 104a is positioned at the end of the optical axis of an objective lens 101 that faces a medium 100. A wavelength selecting filter 300 for controlling the NA of the objective lens 101, and first, second and third beam splitters 102a, 102b and 102c are arranged at predetermined positions between the objective lens 101 and the first light source 104a. Also, a collimating lens 103, which is a feature of the present invention, is positioned between the second and third beam splitters 102b and 102c.

The third beam splitter 102c transmits the laser beam from the first light source 104a and reflects the laser beam from a second light source 104b toward the medium 100. As shown in Figure 19, the second light source 104b is arranged on the optical path of the light reflected from the third beam splitter 102c.

The second beam splitter 102b transmits all of the laser beams from the first and second light sources 104a and 104b, and reflects the light reflected from the medium 100, which originated from the second light source 104b. The light reflected by the medium 100 and in turn by the second beam splitter 102b is condensed by a second condensing lens 802 onto a second photodetector 702.

The first beam splitter 102a transmits all of the laser beams from the first and second light sources 104a and 104b toward the medium 100. Also, the first beam splitter 102a reflects the light reflected from the medium 100, which originated from the first light source 104a, and transmits the light reflected from the medium 100, which originated from the second light source 104b. The light reflected by the medium 100 and in turn by the first beam splitter 102a is condensed by a first condensing lens 801 onto a first photodetector 602.

The use of the wavelength selecting filter 300 is optional. In other words, the wavelength selecting filter 300 is incorporated into the optical pickup when there is a need for separately controlling NA for the first and second light sources 104a and 104b. For example, if the first light source 104a emits a 400 nm blue laser beam and needs a NA of 0.7, and the second light source 104b emits a 650 nm red laser beam and needs a NA of 0.6, the wavelength selecting filter 300 is employed to allow a reduction of the NA of the objective lens to 0.6 for the 650 nm laser beam while transmitting all of the 400 nm laser beam.

The collimating lens 103, which forms a feature of the present invention as mentioned previously, includes a focusing lens 103a with focusing power and a diverging lens 103b with diverging power. Assuming that the focal distance of the entire collimating lens 103 is f and the focal distance of the diverging lens 103b is fn, the collimating lens 103 satisfies the relationship -1.5 > f/fn. The collimating lens 103 collimates the laser beams from the first and second light sources 104a and 104b, and simultaneously helps to correct chromatic aberration.

Embodiment 10

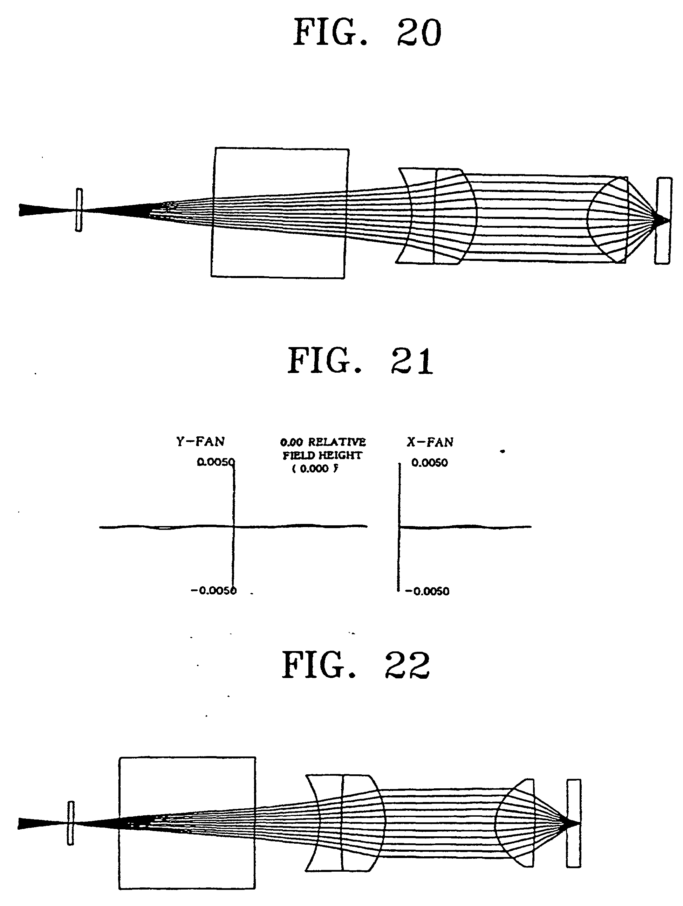

A tenth embodiment of the optical pickup according to the present invention is schematically shown in Figures 20 and 22, and the optical data for the optical pickup of Figures 20 and 22 is listed in Table 4.

Table 4

| Surface | Curvature Radius | Thickness | Name of Glass |
|---|---|---|---|
| Object Surface | Infinity | 0.100000 | |
| s1 | Infinity | 0.250000 | BK7 |
| s2 | Infinity | 5.929508z 2.122789z | |
| s3 | Infinity | 6.000000 | BK71 |
| s4 | Infinity | 3.000000 | |
| s5 | -4.081133 | 1.000000 | FDS1 |
| s6 | 30.164147 | 2.000000 | BACD5 |
| s7 | -3.467121 | 5.000000 | |
| | K: -0.2007701 A: 0.445555E-03 B: -0119205E-03 C:0.316310E-04 D:-.267022E -05 | | |
| s8 STOP | 1.770182 | 1.802215 | BACD5 |
| | K: -0.721945 A: 0.537259E-02 B: -.183575E-03 C:-.855000E-04 D: -0.121341E-04 | | |
| | K: -0.721945 A: 0.537259E-02 B: 0.183575E-03 C:0.855000E-04 D: -0.121341E-04 | | |
| s9 | -11.452471 | 1.272566 | |
| | K: -179.717539 A: 0.222258E-02 B: -.194835E-03 C:-.172951E-04 D: 0.399488E-05 | | |
| s10 | Infinity | 0.600000 | 'CG' |
| s11 | Infinity | 0.000000 | |
| Image Surface | Infinity | 0.000000 | |
| Equation of Aspheric Surface (see Formula (2) hereinabove) | | | |
| Refractivity/Abbe's Number on d-line, v | | BK7 : 1.514520 at 650 nm/ 1.530849 at 400 nm/ 64.2 FDS1 : 1.911294 at 650 nm/ 2.012371 at 400 nm/ 20.9 TAC8 : 1.725425 at 650 nm/ 1.752798 at 400 nm/ 54.7 BACD5 : 1.586422 at 650 nm/ 1.606048 at 400 nm/ 61.3 | |

Table continued

| | 'CG' : 1.581922 at 650 nm/ 1.623343 at 400 nm/ 31.0 |
|---|---|
| Diameter of Entrance Pupil (mm) | 4.0 |
| wavelength (nm) | 400, 650 |
| Focal Distance of Diverging and Focusing Components of Collimating Lens (mm) | -3.499/4.239 at 400 nm |
| Focal Distance of Entire Collimating Lens (mm) | 19.995 at 400 nm |
| Focal Distance of Objective Lens (mm) | 2.667 at 400 nm |
| $\Sigma\, 1\,/\,(fi{\cdot}vi)$ | -0.0032 |

In the present embodiment, a light source of 400 nm, a collimating lens having a focal distance of about 20 mm, and an objective lens having a NA of 0.75 were employed. As the wavelength of light emitted from the light source varies in the error range of $\pm$ 5 nm, the degree of defocus can be expressed as an uncertainty of $\pm$ 0.36$\mu$m in the focal depth. Also, the optical distance at 650 nm is 0.012$\lambda$.

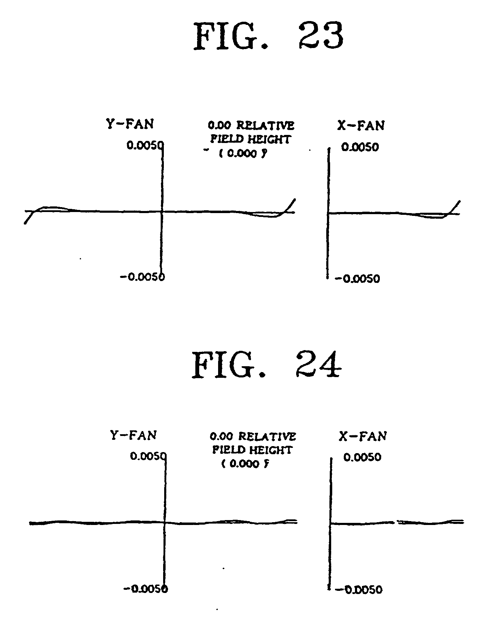

Figure 20 illustrates the optical path of light having a wavelength of 405 nm in the optical pickup according to the present invention, and Figure 21 illustrates aberration in the optical pickup of Figure 20. Figure 22 illustrates the optical path of light having a wavelength of 650 nm in the optical pickup according to the present invention, and Figure 23 illustrates aberration in the optical pickup of Figure 22. In particular, Figure 24 comparatively illustrates aberration of 400 nm light and 401 and 405 nm light in the optical pickup of Figure 20.

As shown in Figure 24, the difference in the aberration of 400 nm light and 405 nm light is hardly detected in the optical pickup according to the present invention. Because the collimating lens according to the present invention has high focusing power, aberration can be effectively corrected. As a result, a light spot can be focused onto a medium within the range of a focal depth in response to variation of the wavelength of emission light.

For more effective reduction of chromatic aberration with respect to such short wavelength light beams, assuming that the focal distance of the entire collimating lens is f and the focal distance of the diverging lens is fn, it is necessary that the collimating lens satisfies the relationship -1.5 > f/fn.

Preferably, assuming that the front focal distances of lenses, which comprise the optical pickup, are f1, f2, ..., and fn, arranged from the light source toward the medium, and the Abbe's numbers on the d-line of the optical materials of the lenses are v1, v2, ..., and vn, the optical pickup satisfies the relationship -0.005 < 1/(f1·v1)+1/(f2·v2)+...+1/(fn·vn) < 0.005.

The optical pickup according to embodiments of the present invention is compatible with both existing DVDs, and HD-DVDs, which require a blue light source near 405 nm and an objective lens having an NA of 0.6, but the specification thereof is not standardized yet. The optical pickup according to the present invention ensures high-density information reading and recording using an objective lens having a high NA and a light source with a short wavelength of 500 nm or less. In particular, the collimating lens having the configuration explained above contributes to high-density reading and recording by effectively correcting chromatic aberration with respect to short wavelength blue laser light.

While this invention has been particularly shown and described with reference to preferred embodiments thereof, it will be understood by those skilled in the art that various changes in form and details may be made thereto without departing from the scope of the invention as defined by the appended claims.

**Claims**

1. An optical pickup comprising:

   a first light source (104) for generating a first laser beam;
   an objective lens (101) for focusing the laser beam onto a first medium (100);
   a first photodetector (106) for converting the first laser beam reflected from the first medium (100) into an electrical signal; and
   a collimating lens (103) arranged between the first light source (104) and the objective lens (101), the collimating lens (103) including a diverging lens (103b) with diverging power and a focusing lens (103a) with focusing power;

   **characterised in that**:

the first laser beam has a wavelength of 500nm or less; and
assuming that the total focal distance of the collimating lens (103) at said wavelength of said first laser beam is f and the focal distance of the diverging lens (103b) at said wavelength of said first laser beam is fn, the collimating lens (103) satisfies the relationship -1.5 > f/fn.

2. The optical pickup of claim 1, further comprising a beam splitter (102) between the objective lens (101) and the first photodetector (106), for transmitting the first laser beam from the first light source (104) toward the first medium (100) through the objective lens (101), and reflecting the first laser beam reflected from the first medium (100).

3. The optical pickup of claim 1 or 2, further comprising a condensing lens (105) between the first photodetector (106) and the beam splitter (102), for condensing the first laser beam reflected from the first medium (100) onto the first photodetector (106).

4. The optical pickup of claim 1, 2 or 3, wherein the collimating lens (103) is arranged between the beam splitter (102) and the first light source (104).

5. The optical pickup of any of claims 1 to 3, wherein the collimating lens (103) is arranged between the objective lens (101) and the beam splitter (102).

6. The optical pickup of any of claims 1 to 5, wherein if the front focal distances of the lenses from the first light source (104) toward the medium (100) are f1, f2, ..., and fn, respectively, and the Abbe's numbers of the optical materials of the lenses are v1, v2, ..., and vn, respectively, the optical pickup satisfies the relationship -0.005 < 1/(f1-v1)+1/(f2-v2)+...+1/(fn·vn) < 0.005.

7. An optical pickup according to claim 1, further comprising:

   a second light source (104b), which corresponds to a second medium (100), the second light source for generating a laser beam of a longer wavelength than the first light source, the objective lens (101) focusing the second laser beam from the second light source (104b) onto the second medium (100); and
   a second photodetector (602; 702) for receiving the second laser beam emitted from the second light source (104b) and reflected from the second medium (100).

8. The optical pickup of claim 7, further comprising a wavelength selecting filter (300) on the optical axis near the objective lens (101).

9. The optical pickup of claim 7 or 8, wherein the first light source (104a) emits a first laser beam having a wavelength of about 400 nm, and the second light source emits a second laser beam having a wavelength of about 650 nm.

10. The optical pickup of claim 7, wherein:

    the objective lens (101) is arranged facing the first and second media (100);
    the first light source (104a) is arranged on the optical path of the objective lens (101);
    a beam splitter (102) is arranged between the objective lens (101) and the first light source (104a);
    the second light source (104a) is arranged on the optical path of the light reflected from the beam splitter (102) ; and
    the collimating lens (103) is arranged between the objective lens (101) and the beam splitter (102).

11. The optical pickup of claim 7, wherein:

    the objective lens (101) is arranged facing the first and second media (100);
    the first light source (104a) is arranged on the optical path of the objective lens (101), for emitting the first laser beam toward the first medium (100);
    first, second and third beam splitters (102a-c) are arranged on the optical path at predetermined positions from the first light source (104a) toward the objective lens (101);
    the second light source (104b) is arranged on the optical path of the light reflected by the third beam splitter (102c), for emitting the second laser beam through the third beam splitter (102c) toward the second medium (100);
    the first photodetector (602) is arranged on the optical path of the light reflected by the first beam splitter (102a), for receiving the first laser beam emitted from the first light source (104a) and reflected from the first medium (100);

the second photodetector (702) is arranged on the optical path of the light reflected by the second beam splitter (102b), for receiving the second laser beam emitted from the second light source (104b) and reflected from the second medium (100); and

the collimating lens (103) is arranged between the first and second beam splitters (102a; 102b).

12. The optical pickup of claim 7, wherein:

the objective lens (101) is arranged facing the first and second media (100);

the first light source (104a) is arranged on the optical path of the objective lens (101), for emitting the first laser beam toward the first medium (100);

first, second and third beam splitters (102a-c) are arranged on the optical path at predetermined positions from the first light source (104a) toward the objective lens (101);

the second light source (104b) is arranged on the optical path of the light reflected by the third beam splitter (102c), for emitting the second laser beam through the third beam splitter (102c) toward the second medium (100);

the first photodetector (602) is arranged on the optical path of the light reflected by the first beam splitter (102a), for receiving the first laser beam emitted from the first light source (104a) and reflected from the first medium (100);

the second photodetector (702) is arranged on the optical path of the light reflected by the second beam splitter (102b), for receiving the second laser beam emitted from the second light source (104b) and reflected from the second medium (100); and

the collimating lens (103) is arranged between the objective lens (101) and the third beam splitter (102c).

13. The optical pickup of any claims 10 to 12, further comprising a wavelength selecting filter (300) between the objective lens (101) and the collimating lens (103), for controlling the numerical aperture (NA) of the objective lens (101).

14. The optical pickup of any of claims 10 to 13, wherein the first light source (104a) emits a first laser beam having a wavelength of about 400 nm, and the second light source (104b) emits a second laser beam having a wavelength of about 650 nm.

15. The optical pickup of any of claims 7 to 14, wherein if the front focal distances of the lenses from the first light source (104a) toward the media are f1, f2, ..., and fn, respectively, and the Abbe's numbers of the optical materials of the lenses are v1, v2, ..., and vn, respectively, the optical pickup satisfies the relationship $-0.005 < 1/(f1 \cdot v1) + 1/(f2 \cdot v2) + ... + 1/(fn \cdot vn) < 0.005$.

## Patentansprüche

1. Optischer Abtaster, umfassend:

eine erste Lichtquelle (104) zum Erzeugen eines ersten Laserstrahls,

eine Objektivlinse (101) zum Fokussieren des Laserstrahls auf ein erstes Medium (100),

einen ersten Fotodetektor (106) zum Umwandeln des von dem ersten Medium (100) reflektierten ersten Laserstrahls in ein elektrisches Signal und

eine Kollimatorlinse (103), die zwischen der ersten Lichtquelle (104) und der Objektivlinse (101) angeordnet ist, wobei die Kollimatorlinse (103) eine Zerstreuungslinse (103b) mit Streuleistung und eine Fokussierungslinse (103a) mit Fokussierungsleistung enthält,

**dadurch gekennzeichnet, dass**
der erste Laserstrahl eine Wellenlänge von 500 nm oder weniger hat und
unter der Voraussetzung, dass die Gesamtbrennweite der Kollimatorlinse (103) bei der genannten Wellenlänge des ersten Laserstrahls f ist und die Brennweite der Zerstreuungslinse bei der genannten Wellenlänge des ersten Laserstrahls fn ist, die Kollimatorlinse das Verhältnis von $-1,5 > f/fn$ erfüllt.

2. Optischer Abtaster nach Anspruch 1, des Weiteren einen Strahlenteiler (102) zwischen der Objektivlinse (101) und dem ersten Fotodetektor (106) zum Senden des ersten Laserstrahls von der ersten Lichtquelle (104) durch die Objektivlinse (101) zu dem ersten Medium und zum Reflektieren des von dem ersten Medium (101) reflektierten Laserstrahls umfassend.

3. Optischer Abtaster nach Anspruch 1 oder 2, des Weiteren eine Kondensorlinse (105) zwischen dem ersten Fotodetektor (106) und dem Strahlenteiler (102) zum Konzentrieren des von dem ersten Medium (100) reflektierten ersten Laserstrahls auf den ersten Fotodetektor (106) umfassend.

4. Optischer Abtaster nach Anspruch 1, 2 oder 3, wobei die Kollimatorlinse (103) zwischen dem Strahlenteiler (102) und der ersten Lichtquelle (104) angeordnet ist,

5. Optischer Abtaster nach einem der Ansprüche 1 bis 3, wobei die Kollimatorlinse (103) zwischen der Objektivlinse (101) und dem Strahlenteiler (102) angeordnet ist.

6. Optischer Abtaster nach einem der Ansprüche 1 bis 5, wobei, wenn die vorderen Brennweiten der Linsen von der ersten Lichtquelle (104) zu dem Medium (100) jeweils f1, f2, ... und fn sind und die Abbe'schen Zahlen der optischen Materialien der Linsen jeweils v1, v2, ... und vn sind, der optische Abtaster das Verhältnis von $-0,005 < 1/(f1 \cdot v1) + 1/(f2 \cdot v2) + ... + 1/(fn \cdot vn) < 0,005$ erfüllt.

7. Optischer Abtaster nach Anspruch 1, des Weiteren umfassend:

   eine zweite Lichtquelle (104b), die einem zweiten Medium (100) entspricht, wobei die zweite Lichtquelle einen Laserstrahl einer längeren Wellenlänge als die erste Lichtquelle erzeugt und die Objektivlinse (101) den zweiten Laserstrahl von der zweiten Lichtquelle (1 04b) auf das zweite Medium (100) fokussiert, und
   einen zweiten Fotodetektor (602, 702) zum Empfangen des von der zweiten Lichtquelle (104b) emittierten und von dem zweiten Medium (100) reflektierten Laserstrahls.

8. Optischer Abtaster nach Anspruch 7, des Weiteren einen Wellenlängenauswahlfilter (300) auf der optischen Achse, nahe der Objektivlinse (101) angeordnet, umfassend.

9. Optischer Abtaster nach Anspruch 7 oder 8, wobei die erste Lichtquelle (104a) einen ersten Laserstrahl mit einer Wellenlänge von ungefähr 400 nm emittiert und die zweite Lichtquelle (104b) einen zweiten Laserstrahl mit einer Wellenlänge von ungefähr 650 nm emittiert.

10. Optischer Abtaster nach Anspruch 7, in dem
    die Objektivlinse (101) dem ersten und dem zweiten Medium (100) zugewandt angeordnet ist,
    die erste Lichtquelle (104a) in dem Lichtweg der Objektivlinse (101) angeordnet ist,
    ein Strahlenteiler (102) zwischen der Objektivlinse (101) und der ersten Lichtquelle (104a) angeordnet ist,
    die zweite Lichtquelle (104b) in dem Lichtweg des von dem Strahlenteiler (102) reflektierten Lichts angeordnet ist und
    die Kollimatorlinse (103) zwischen der Objektivlinse (101) und dem Strahlenteiler (102) angeordnet ist.

11. Optischer Abtaster nach Anspruch 7, in dem
    die Objektivlinse (101) dem ersten und dem zweiten Medium (100) zugewandt angeordnet ist,
    die erste Lichtquelle (104a) zum Emittieren des ersten Laserstrahls zu dem ersten Medium (100) in dem Lichtweg der Objektivlinse (101) angeordnet ist,
    ein erster, ein zweiter und ein dritter Strahlenteiler (102a-102c) in dem Lichtweg von der ersten Lichtquelle (104a) zu der Objektivlinse (101) auf vorgegebenen Positionen angeordnet sind,
    die zweite Lichtquelle (104b) zum Emittieren des zweiten Laserstrahls durch den dritten Strahlenteiler (102c) zu dem zweiten Medium (100) in dem Lichtweg des durch den dritten Strahlenteiler (102c) reflektierten Lichts angeordnet ist,
    der erste Fotodetektor (602) zum Empfangen des von der ersten Lichtquelle (104a) emittierten und von dem ersten Medium reflektierten ersten Laserstrahls in dem Lichtweg des durch den ersten Strahlenteiler (102a) reflektierten Lichts angeordnet ist,
    der zweite Fotodetektor (702) zum Empfangen des von der zweiten Lichtquelle (104b) emittierten und von dem zweiten Medium (100) reflektierten zweiten Laserstrahls in dem Lichtweg des von dem zweiten Strahlenteiler (102b) reflektierten Lichts angeordnet ist und
    die Kollimatorlinse (103) zwischen dem ersten Strahlenteiler (102a) und dem zweiten Strahlenteiler (102b) angeordnet ist.

12. Optischer Abtaster nach Anspruch 7, in dem
    die Objektivlinse (101) dem ersten und dem zweiten Medium (100) zugewandt angeordnet ist,
    die erste Lichtquelle (1 04a) zum Emittieren des ersten Laserstrahls zu dem ersten Medium (100) in dem Lichtweg der Objektivlinse angeordnet ist,

ein erster, ein zweiter und ein dritter Strahlenteiler (102a-102c) in dem Lichtweg von der ersten Lichtquelle (104a) zu der Objektivlinse (101) auf vorgegebenen Positionen angeordnet sind,

die zweite Lichtquelle (104b) zum Emittieren des zweiten Laserstrahls durch den dritten Strahlenteiler (102c) zu dem zweiten Medium (100) in dem Lichtweg des durch den dritten Strahlenteiler (102c) reflektierten Lichts angeordnet ist,

der erste Fotodetektor (602) zum Empfangen des von der ersten lichtquelle (104a) emittierten und von dem ersten Medium reflektierten ersten Laserstrahls in dem Lichtweg des durch den ersten Strahlenteiler (102a) reflektierten Lichts angeordnet ist,

der zweite Fotodetektor (702) zum Empfangen des von der zweiten Lichtquelle (104b) emittierten und von dem zweiten Medium (100) reflektierten zweiten Laserstrahls in dem Lichtweg des von dem zweiten Strahlenteiler (102b) reflektierten Lichts angeordnet ist und

die Kollimatorlinse (103) zwischen der Objektivlinse (101) und dem dritten Strahlenteiler (102c) angeordnet ist.

13. Optischer Abtaster nach einem der Ansprüche 10 bis 12, des Weiteren zum Steuem des Blendendurchmessers (NA) der Objektivlinse (101) einen Wellenlängenauswahlfilter (300) zwischen der Objektivlinse (101) und der Kollimatorlinse (103) umfassend.

14. Optischer Abtaster nach einem der Ansprüche 10 bis 13, wobei die erste Lichtquelle (104a) einen ersten Laserstrahl mit einer Wellenlänge von ungefähr 400 nm emittiert und die zweite Lichtquelle (104b) einen zweiten Laserstrahl mit einer Wellenlänge von ungefähr 650 nm emittiert.

15. Optischer Abtaster nach einem der Ansprüche 7 bis 14, wobei, wenn die vorderen Brennweiten der Linsen von der ersten Lichtquelle (1 04a) zu dem Medium (100) jeweils f1, f2, ... und fn sind und die Abbe'schen Zahlen der optischen Materialien der Linsen jeweils v1, v2, ... und vn sind, der optische Abtaster das Verhältnis von

$-0{,}005 < 1/(f1{\cdot}v1)+1/(f2{\cdot}v2)+...+1/(fn{\cdot}vn) < 0{,}005$ erfüllt.

## Revendications

1. Tête de lecture optique comportant:

une première source de lumière (104) pour générer un premier faisceau laser,
un objectif (101) pour focaliser le faisceau laser sur un premier milieu (100),
un premier photodétecteur (106) pour convertir le premier faisceau laser réfléchi par le premier milieu (100) en un signal électrique, et
une lentille collimatrice (103) disposée entre la première source de lumière (104) et l'objectif (101), la lentille collimatrice (103) incluant une lentille divergente (103b) ayant une puissance de divergence et une lentille de focalisation (103a) ayant une puissance de focalisation,

**caractérisée en ce que** :

le premier faisceau laser a une longueur d'onde de 500 nm ou moins, et
en supposant que la distance focale totale de la lentille collimatrice (103) à ladite longueur d'onde dudit premier faisceau laser est f et la distance focale de la lentille divergente (103b) à ladite longueur d'onde dudit premier faisceau laser est fn, la lentille collimatrice (103) satisfait à la relation -1,5 > f/fn.

2. Tête de lecture optique selon la revendication 1, comportant de plus un diviseur de faisceau (102) entre l'objectif (101) et le premier photodétecteur (106), pour transmettre le premier faisceau laser provenant de la première source de lumière (104) vers le premier milieu (100) à travers l'objectif (101), et réfléchir le premier faisceau laser réfléchi depuis le premier milieu (100).

3. Tête de lecture optique selon la revendication 1 ou 2, comportant de plus une lentille condensatrice (105) entre le premier photodétecteur (106) et le diviseur de faisceau (102), pour condenser le premier faisceau laser réfléchi par le premier milieu (100) sur le premier photodétecteur (106).

4. Tête de lecture optique selon la revendication 1, 2 ou 3, dans laquelle la lentille collimatrice (103) est disposée entre le diviseur de faisceau (102) et la première source de lumière (104).

**5.** Tête de lecture optique selon l'une quelconque des revendications 1 à 3, dans laquelle la lentille collimatrice (103) est disposée entre l'objectif (101) et le diviseur de faisceau (102).

**6.** Tête de lecture optique selon l'une quelconque des revendications 1 à 5, dans laquelle si les distances focales avant des lentilles depuis la première source de lumière (104) vers le milieu (100) sont f1, f2, ..., et fn, respectivement, et les nombres d'Abbe des matériaux optiques des lentilles sont v1, v2, ..., et vn, respectivement, la tête de lecture optique satisfait à la relation $-0,005 < 1/(f1 \cdot v1) + 1/(f2 \cdot v2) + ... + 1/(fn \cdot vn) < 0,005$.

**7.** Tête de lecture optique selon la revendication 1, comportant de plus :

une seconde source de lumière (104b), qui correspond à un second milieu (100), la seconde source de lumière étant destinée à générer un faisceau laser ayant une longueur d'onde plus longue que la première source de laser, l'objectif (101) focalisant le second faisceau laser provenant de la seconde source de lumière (104b), sur le second milieu (100), et
un second photodétecteur (602 ; 702) pour recevoir le second faisceau laser émis par la seconde source de lumière (104b) et réfléchi par le second milieu (100).

**8.** Tête de lecture optique selon la revendication 7, comportant de plus un filtre de sélection de longueur d'onde (300) sur l'axe optique à proximité de l'objectif (101).

**9.** Tête de lecture optique selon la revendication 7 ou 8, dans laquelle la première source de lumière (104a) émet un premier faisceau laser ayant une longueur d'onde d'environ 400 nm, et la seconde source de lumière émet un second faisceau laser ayant une longueur d'onde d'environ 650 nm.

**10.** Tête de lecture optique selon la revendication 7, dans laquelle :

l'objectif (101) est disposé en regard des premier et second milieux (100),
la première source de lumière (104a) est disposée sur le trajet optique de l'objectif (101),
un diviseur de faisceau (102) est disposé entre l'objectif (101) et la première source de lumière (104a),
la seconde source de lumière (104a) est disposée sur le trajet optique de la lumière réfléchie par le diviseur de faisceau (102), et
la lentille collimatrice (103) est disposée entre l'objectif (101) et le diviseur de faisceau (102).

**11.** Tête de lecture optique selon la revendication 7, dans laquelle :

l'objectif (101) est disposé en regard des premier et second milieux (100),
la première source de lumière (104a) est disposée sur le trajet optique de l'objectif (101), pour émettre le premier faisceau laser en direction du premier milieu (100),
des premier, deuxième et troisième diviseurs de faisceau (102a-c) sont disposés sur le trajet optique à des positions prédéterminées depuis la première source de lumière (104a) vers l'objectif (101),
la seconde source de lumière (104b) est disposée sur le trajet optique de la lumière réfléchie par le troisième diviseur de faisceau (102c), pour émettre le second faisceau laser à travers le troisième diviseur de faisceau (102c) en direction du second milieu (100),
le premier photodétecteur (602) est disposé sur le trajet optique de la lumière réfléchie par le premier diviseur de faisceau (102a), pour recevoir le premier faisceau laser émis par la première source de lumière (104a) et réfléchi par le premier milieu (100),
le second photodétecteur (702) est disposé sur le trajet optique de la lumière réfléchie par le deuxième diviseur de faisceau (102b), pour recevoir le second faisceau laser émis par la seconde source de lumière (104b) et réfléchi par le second milieu (100), et
la lentille collimatrice (103) est disposée entre les premier et deuxième diviseurs de faisceau (102a, 102b).

**12.** Tête de lecture optique selon la revendication 7, dans laquelle :

l'objectif (101) est disposé en regard des premier et second milieux (100),
la première source de lumière (104a) est disposée sur le trajet optique de l'objectif (101), pour émettre le premier faisceau laser en direction du premier milieu (100),
des premier, deuxième et troisième diviseurs de faisceau (102a-c) sont disposés sur le trajet optique à des positions prédéterminées depuis la première source de lumière (104a) vers l'objectif (101),

la seconde source de lumière (104b) est disposée sur le trajet optique de la lumière réfléchie par le troisième diviseur de faisceau (102c), pour émettre le second faisceau laser à travers le troisième diviseur de faisceau (102c) en direction du second milieu (100),

le premier photodétecteur (602) est disposé sur le trajet optique de la lumière réfléchie par le premier diviseur de faisceau (102a), pour recevoir le premier faisceau laser émis par la première source de lumière (104a) et réfléchi par le premier milieu (100),

le second photodétecteur (702) est disposé sur le trajet optique de la lumière réfléchie par le deuxième diviseur de faisceau (102b), pour recevoir le second faisceau laser émis par la seconde source de lumière (104b) et réfléchi par le second milieu (100), et

la lentille collimatrice (103) est disposée entre l'objectif (101) et le troisième diviseur de faisceau (102c).

13. Tête de lecture optique selon l'une quelconque des revendications 10 à 12, comportant de plus un filtre de sélection de longueur d'onde (300) entre l'objectif (101) et la lentille collimatrice (103), pour commander l'ouverture numérique (NA) de l'objectif (101).

14. Tête de lecture optique selon l'une quelconque des revendications 10 à 13, dans laquelle la première source de lumière (104a) émet un premier faisceau laser ayant une longueur d'onde d'environ 400 nm, et la seconde source de lumière (104b) émet un second faisceau laser ayant une longueur d'onde d'environ 650 nm.

15. Tête de lecture optique selon l'une quelconque des revendications 7 à 14, dans laquelle si les distances focales avant des lentilles depuis la première source de lumière (104a) vers les milieux sont f1, f2, ..., et fn, respectivement, et les nombres d'Abbe des matériaux optiques des lentilles sont v1, v2, ..., et vn, respectivement, la tête de lecture optique satisfait à la relation -0,005<1/ (f1.v1) +1/ (f2.v2) +...+1/ (fn.vn)<0, 005.

# FIG. 1

# FIG. 2

# FIG. 3 (PRIOR ART)

# FIG. 4

# FIG. 5

# FIG. 6

# FIG. 7

Y- FAN          0.00 RELATIVE          X- FAN
                FIELD HEIGHT
0.0050          ( 0.000 )°             0.0050

- 0.0050                               - 0.0050

# FIG. 8

# FIG. 9

| Y- FAN | 0.00 RELATIVE FIELD HEIGHT ( 0.000 )° | X- FAN |
| --- | --- | --- |
| 0.0050 | | 0.0050 |
| - 0.0050 | | - 0.0050 |

# FIG. 10

# FIG. 11

Y- FAN     ·   0.00 RELATIVE     X- FAN
      FIELD HEIGHT
0.0050      ( 0.000 ℉      0.0050

- 0.0050                 - 0.0050

# FIG. 12 (PRIOR ART)

# FIG. 13 (PRIOR ART)

# FIG. 14

# FIG. 15

# FIG. 16

# FIG. 17

# FIG. 18

# FIG. 19

# FIG. 20

# FIG. 21

Y-FAN          0.00 RELATIVE          X-FAN
                FIELD HEIGHT
0.0050            ( 0.000 )          0.0050

-0.0050                              -0.0050

# FIG. 22

# FIG. 23

Y-FAN    0.00 RELATIVE    X-FAN
         FIELD HEIGHT
0.0050   ( 0.000 )        0.0050

-0.0050                   -0.0050

# FIG. 24

Y-FAN    0.00 RELATIVE    X-FAN
         FIELD HEIGHT
0.0050   ( 0.000 )        0.0050

-0.0050                   -0.0050